(19) **Europäisches Patentamt**
**European Patent Office**
**Office européen des brevets**

(11) **EP 2 104 718 B1**

(12) **FASCICULE DE BREVET EUROPEEN**

(45) Date de publication et mention
de la délivrance du brevet:
**26.10.2016 Bulletin 2016/43**

(51) Int Cl.:
*C09J 5/02* *(2006.01)*      *B60R 21/16* *(2006.01)*
*C08L 83/04* *(2006.01)*      *C09J 183/04* *(2006.01)*
*B60R 21/235* *(2006.01)*

(21) Numéro de dépôt: **07857534.7**

(22) Date de dépôt: **13.12.2007**

(86) Numéro de dépôt international:
**PCT/EP2007/063887**

(87) Numéro de publication internationale:
**WO 2008/080791 (10.07.2008 Gazette 2008/28)**

(54) **COMPOSITION SILICONE ADHESIVE ET PROCEDE DE COLLAGE UTILISANT UNE TELLE COMPOSITION**

SILIKONHAFTZUSAMMENSETZUNG UND HAFTVERFAHREN DAMIT

ADHESIVE SILICONE COMPOSITION AND ADHESION METHOD USING THE SAME

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **27.12.2006 FR 0611435**

(43) Date de publication de la demande:
**30.09.2009 Bulletin 2009/40**

(73) Titulaire: **Bluestar Silicones France
69486 Lyon (FR)**

(72) Inventeurs:
• **DUMONT, Laurent
F-69510 Messimy (FR)**
• **BORDES, Bertrand
F-69006 Lyon (FR)**

(56) Documents cités:
**EP-A- 1 179 454**      **WO-A-2004/101696**
**US-A1- 2002 195 808**

**Description**

Le domaine général de l'invention est celui des compositions silicones réticulables par addition. Les polyorganosiloxanes considérés (POS) sont du type vulcanisable à froid (RTV), sachant que classiquement ils se présentent sous la forme d'un système bicomposant dont la vulcanisation peut être accélérée à chaud.

On s'intéresse plus spécialement dans le cadre de l'invention aux compositions silicones adhésives réticulant par réaction d'addition, dont la cinétique peut être significativement augmentée par une élévation de la température.

L'invention concerne également un procédé de collage d'au moins deux substrats utilisant une telle composition silicone adhésive réticulable.

Dans le cadre de l'invention, ce procédé s'applique plus particulièrement à la fabrication de sacs gonflables utilisés pour la protection des occupants d'un véhicule, appelés communément « airbags ».

Traditionnellement, les airbags sont formés par une toile en fibre synthétique, par exemple en polyamide, et sont fabriqués d'une seule pièce, ou à partir de deux pièces assemblées par exemple par collage ou par couture au moyen d'un fil polyamide. La face externe des airbags réalisés d'une seule pièce est généralement revêtue d'un film élastomère silicone réticulé formant un revêtement de protection et de renfort mécanique, alors que, dans le cas des airbags réalisés à partir de deux pièces cousues, le film élastomère de silicone est prévu sur la face interne de l'airbag. L'assemblage par couture engendre certains inconvénients, puisque les piqûres d'aiguilles dans le film élastomère de silicone et la toile constituent des trous au niveau de la couture, ce qui peut porter préjudice aux propriétés d'étanchéité et à leur résistance aux agressions chimiques, thermiques et climatiques. Il est impératif d'empêcher l'air de fuir au niveau du fil de couture qui relie les deux pièces de l'airbag, en particulier lorsque l'airbag est utilisé comme airbag latéral. En effet, pour protéger les occupants d'un véhicule effectuant des tonneaux, les airbags latéraux qui recouvrent les fenêtres latérales doivent rester gonflés plus longtemps qu'un airbag avant ou passager.

Une solution pour résoudre ce problème d'étanchéité des coutures a été développée et consiste à appliquer un joint de colle au niveau des coutures. Selon ce procédé connu, les pièces de l'airbag sont découpées l'une au-dessus de l'autre, un cordon de colle est ensuite déposé autour d'une des pièces, puis les deux pièces sont compressées pour créer le joint. Le sac collé passe ensuite à l'étape "couture" de la fabrication.

La colle utilisée dans ce procédé est généralement une composition silicone adhésive. Une telle composition adhésive est décrite par exemple dans le brevet EP-B-0 131 854, et permet d'obtenir un adhésif pour coller deux surfaces de manière permanente. Cette composition est obtenue en mélangeant :

(i) 9 à 70% en poids d'un copolymère résineux solide, soluble dans le benzène, contenant des radicaux hydroxyle, constitué essentiellement de motifs $R_3SiO_{1/2}$ et de motifs $SiO_{4/2}$, où R est un groupe hydrocarboné monovalent contenant moins de 5 atomes de carbone, au moins 95% des groupes R dans (i) étant des groupes méthyles,

(ii) 30 à 91% en poids d'un polydiorganosiloxane de formule $HO(R_2SiO)_aH$, où R est tel que défini ci-dessus, la valeur moyenne de a est telle que la viscosité de (ii) est supérieure à 10 000 Pa.s à 25°C,

(iii) 0.75 à 8 parties en poids sur la base de 100 parties en poids de (i) et (ii), d'un organohydrogénopolysiloxane compatible avec le mélange de (i) et (ii) et ayant des motifs de formule $R_bH_cSiO_{(4-b-c)/2}$ où R est tel que défini ci-dessus, b est compris entre 1.00 et moins de 2, c est compris entre 0.3 et 1.00, la somme b+c étant comprise entre 1.30 et moins de 3.00, plus de deux atomes d'hydrogène liés au silicium étant présents en moyenne par molécule de (iii), aucun atome de silicium ne portant pas plus d'un atome d'hydrogène lié au silicium, le ratio molaire de motifs SiH de (iii) aux motifs SiOH de (i) et (ii) étant compris entre 0.2/1 et 1/1, et le poids des atomes d'hydrogène présent sur le silicium étant inférieur à 0.05 g pour 100 g de (i) et (ii),

(iv) 0.5 à 2 parties en poids, sur la base de 100 parties en poids de (i) et (ii) d'un catalyseur soluble à base d'étain, et

(v) une quantité suffisante de solvant non réactif pour le mélange de (i), (ii) (iii) et (iv), pour obtenir un adhésif susceptible de s'écouler dont la viscosité et la teneur en solides sont conjointement telles qu'une seule application de l'adhésif permet d'atteindre une épaisseur d'adhésif d'au moins 0.1 mm.

Le procédé décrit pour appliquer cette composition prévoit une étape d'évaporation du solvant, ce qui augmente le temps de fabrication d'une pièce, et diminue le rendement de production.

De plus, les performances de cet adhésif restent modestes, en tout cas pas suffisantes pour pouvoir utiliser cet adhésif dans le domaine de l'assemblage des airbags.

Or, dans le cas particulier des airbags, on doit utiliser des adhésifs présentant une force de collage suffisante et une contrainte à la rupture et un taux d'allongement élevés. En effet, lorsque l'airbag s'ouvre, la toile se gonfle très rapidement, et la déformation de la toile au niveau des coutures est très forte. Cela est particulièrement observé dans les airbags latéraux, pour lesquels, contrairement aux airbags avant et passagers, la toile au niveau des coutures n'est pas pliée vers l'intérieur mais vers l'extérieur, à cause de la forme complexe du sac.

D'autres formulations ont donc été développées afin d'améliorer les propriétés mécaniques des adhésifs. Notamment, le brevet EP-B-1 225 211 décrit une composition silicone adhésive qui comprend :

A. 100 parties en poids d'un organopolysiloxane ayant une moyenne d'au moins deux groupes alcényles par molécule ;

B. un organopolysiloxane ayant une moyenne d'au moins deux atomes d'hydrogène liés à un atome de silicium dans chaque molécule, en une quantité telle que le ratio molaire des atomes d'hydrogène liés à un atome de silicium dans le composant B sur les groupes alcényles dans le composant A est de 0.01 à 20 ;

C. entre 5 et 200 parties en poids d'une poudre de carbonate de calcium choisi parmi le groupe comprenant le carbonate de calcium non traité, le carbonate de calcium traité avec un acide organique et le carbonate de calcium traité avec un ester d'un acide organique, ladite poudre de carbonate de calcium ayant une surface spécifique BET comprise entre 5 et 50 m$^2$/g ; et

D. un catalyseur à base de platine, en une quantité suffisante pour obtenir la prise de la composition.

Cette composition permet d'obtenir un adhésif présentant une résistance à la traction de 3,5 MPa (test JISK6251) et un allongement à la rupture de 1500%. Toutefois, il est indiqué que cette composition est laissée durcir pendant 7 jours à 25°C pour obtenir l'adhésif présentant les propriétés recherchées en élongation et en résistance à la traction. Il est bien évident qu'il n'est pas possible dans une production industrielle de prévoir un tel temps de réticulation.

La demande de brevet EP 1179454 A2 divulgue un airbag pour véhicule dont les éléments constitutifs sont collés avec un adhésif silicone comprenant un organopolysiloxane avec des groupements vinyle, un réticulant comprenant des radicaux hydrogénosilylés (Si-H) et un catalyseur au platine.

On connaît également par la publication WO 2004/101696 au nom de la déposante un procédé de collage de supports fibreux, tissés ou non, comprenant au moins un revêtement silicone, ce procédé étant du type de ceux consistant à faire se chevaucher les supports à coller, un adhésif à base de silicone étant inséré entre les supports, sur au moins une partie de la zone de chevauchement;

caractérisé en ce qu'il consiste essentiellement à :

- mettre en oeuvre au moins un adhésif silicone réticulable de la classe des "*Liquid Silicone Rubbers*" (LSR) ou de la classe des Elastomères Silicones Pompables (ESP), se présentant sous forme liquide (pâte fluide) à température ambiante et ayant les caractéristiques rhéologiques suivantes :

  ➢ borne haute de fluidité :

  viscosité Brookfield à 25°C en Pa.s:

$$\eta \geq 100, \text{ de préférence } \eta \geq 200$$

  ➢ borne basse de fluidité :

  vitesse d'extrusion Ve en g.min$^{-1}$ mesurée selon un test Te

$$Ve \leq 20, \text{ de préférence } Ve \leq 50 \ ;$$

- mettre cet adhésif liquide directement en forme et en place sur au moins l'un des supports à coller, dans leur zone de chevauchement ;
- maintenir en contact intime les supports encollés dans leur zone de chevauchement, de manière à éviter tout piégeage d'air à l'interface ;
- et à chauffer l'adhésif en place entre les supports ainsi maintenus en contact intime, de façon à permettre le collage des supports par réticulation de l'adhésif.

De préférence, l'adhésif silicone retenu a la composition suivante :

(a) au moins un polyorganosiloxane (POS) présentant, par molécule, au moins deux groupes alcényles, de préférence en $C_2$-$C_6$ liés au silicium ;
(b) une charge minérale renforçante,
(c) une quantité catalytiquement efficace d'au moins un catalyseur :

  ➢ à base d'au moins un peroxyde organique dans le cas où la composition est exempte de réticulant POS (e) défini ci-après ;

➢ ou à base d'au moins un composé métallique, de préférence platinique, et avantageusement associé à un régulateur de prise, dans le cas où la composition comprend au moins un réticulant POS (e) défini ci-après;

(d) éventuellement une charge complémentaire;

(e) éventuellement au moins un réticulant polyorganosiloxane présentant, par molécule, au moins trois atomes d'hydrogène liés au silicium;

(f) éventuellement au moins un additif polyorganosiloxane dans lequel au moins 50% en nombre des atomes de silicium sont directement liés chacun à au moins un atome d'hydrogène;

(g) éventuellement au moins un promoteur d'adhérence;

(h) éventuellement au moins une résine polyorganosiloxane;

(i) et éventuellement des additifs fonctionnels pour conférer des propriétés spécifiques.

Les exemples relatifs aux LSR montrent qu'il est nécessaire de chauffer 3 minutes à 180°C pour obtenir une force de pelage de 40 N/cm.

Les propriétés mécaniques en terme de force de collage de ces adhésifs sont acceptables notamment pour réaliser des joints de colle au niveau des coutures des airbags. Toutefois, les temps de réticulation sont encore trop longs et les propriétés d'allongement et de résistance à la traction ne sont pas suffisantes pour cette application particulière.

Afin d'augmenter les cadences de production, on recherche donc une composition adhésive qui durcisse très rapidement, la réticulation pouvant être accélérée par chauffage, tout en conservant les propriétés mécaniques au moins équivalentes à celles des adhésifs déjà utilisés dans le domaine des airbags. Plus précisément, il est nécessaire de prévoir une composition adhésive qui sera appliquée au niveau de la couture pour donner un joint de colle qui collera suffisamment les deux pièces d'un sac déjà revêtues d'un film élastomère de silicone, qui empêchera la fuite de l'air, qui sera résistant au vieillissement, et qui restera continu d'une pièce du sac à l'autre lors du gonflage brusque de sac. En particulier, lorsque le sac se gonfle, le joint de colle doit résister à la très forte extension entre les deux pièces du sac tout en continuant à recouvrir le fil de couture afin de conserver l'étanchéité. Il apparaît qu'il est nécessaire de disposer d'un adhésif qui soit capable de dissiper un maximum d'énergie. En effet, plus l'adhésif absorbera d'énergie et plus l'airbag résistera à la pression pendant et après son ouverture. Dans la présente description, l'énergie dissipée est définie comme étant l'aire sous la courbe de traction représentant la contrainte en fonction de la déformation.

Compte tenu de l'art antérieur, l'un des objectifs essentiels de la présente invention est de fournir une composition silicone adhésive réticulable rapidement afin de pouvoir accélérer les cadences de production des produits à coller.

Un autre objectif essentiel de la présente invention est de fournir une nouvelle composition silicone adhésive, appliquée notamment sur un revêtement siliconé, et permettant d'obtenir un adhésif présentant une force de pelage suffisante, par exemple supérieure ou égale à 30 N/cm.

Un autre objectif essentiel de la présente invention est de fournir une composition silicone adhésive permettant d'absorber un maximum d'énergie lorsque le produit collé subit des contraintes.

Un autre objectif essentiel de la présente invention est de fournir une composition silicone adhésive ou une utilisation de celle-ci pour le collage de deux substrats, ces substrats étant notamment deux pièces assemblées par couture constituant un sac gonflable pour la protection d'un occupant de véhicule.

Un autre objectif essentiel de la présente invention est de préconiser l'utilisation d'une telle composition silicone réticulable comme joint d'étanchéité des coutures de deux substrats assemblés par couture.

Un autre objectif essentiel de la présente invention est de fournir un procédé de collage d'au moins deux substrats à l'aide d'une composition silicone réticulable, ledit procédé permettant d'obtenir facilement et économiquement un assemblage solide et durable entre les deux substrats.

Ces objectifs, parmi d'autres, sont atteints par la présente invention qui concerne tout d'abord une composition silicone adhésive réticulable comprenant :

(A) au moins un polyorganosiloxane (POS A) présentant, par molécule, au moins deux groupes alcényles, de préférence en $C_2$-$C_6$ liés au silicium;

(B) au moins un réticulant polyorganosiloxane présentant, par molécule, au moins deux atomes d'hydrogène liés au silicium;

(C) une quantité catalytiquement efficace d'au moins un catalyseur à base d'au moins un composé métallique, de préférence platinique ;

(D) une charge minérale renforçante;

(E) éventuellement une charge complémentaire;

(F) éventuellement un inhibiteur de réticulation

(H) éventuellement au moins une résine polyorganosiloxane;

(I) et éventuellement des additifs fonctionnels pour conférer des propriétés spécifiques,

caractérisée en ce qu'elle comprend également au moins une gomme polyorganosiloxane POS (A'), différente du POS (A), ayant une teneur pondérale en groupe(s) alcényle(s), de préférence en $C_2$-$C_6$ liés au silicium et plus préférentiellement encore vinylique(s), comprise entre 0,001% et 0,2%, et de préférence entre 0,01% et 0,1%, et présentant à 25°C une consistance comprise entre 300 et 1200, de préférence entre 500 et 1000, et plus préférentiellement encore entre 600 et 900.

La composition adhésive selon l'invention est avantageuse en ce qu'elle permet d'obtenir des temps de réticulation très courts, à température ambiante ou par chauffage, sans nuire aux propriétés mécaniques de l'adhésif obtenu. En particulier, la composition adhésive selon l'invention réticule en 3 heures environ à 25°C, ou de préférence par chauffage à 190°C dans un temps inférieur à 5 minutes et plus préférentiellement encore par chauffage à 80°C en 90 secondes. De plus, l'adhésif obtenu présente des valeurs de tension à la rupture et d'allongement à la rupture telles que l'énergie absorbée par l'adhésif obtenu avec la composition selon l'invention est supérieure à l'énergie absorbée par les adhésifs existant sur le marché.

Dans le présent exposé, on se réfère à la nomenclature "silicone" suivante pour représenter les motifs siloxy ("Chemistry and technology of silicones" Walter NOLL Academic Press 1968 Table 1 page 3") :

- M : $(R°)_3SiO_{1/2}$,
- $M^{Alc}$ : $(R°)_2(Alc)SiO_{1/2}$,
- D : $(R°)_2SiO_{2/2}$,
- $D^{Alc}$ : $(R°)(Alc)SiO_{2/2}$,
- M': $(R°)_2(H)SiO_{1/2}$,
- D' : $(R°)(H)SiO_{2/2}$,
- $M^{OH}$ : $(R°)_2(OH)SiO_{1/2}$,
- $D^{OH}$ : $(R°)(OH)SiO_{2/2}$,
- T : $(R°)SiO_{3/2}$,
- Q : $SiO_{4/2}$,

où R° est choisi parmi les groupes alkyles linéaires ou ramifiés ayant de 1 à 8 atomes de carbone inclus (e.g. méthyle, éthyle, isopropyle, tertiobutyle et n-hexyle), éventuellement substitués par au moins un atome d'halogène (e.g.trifluoro-3,3,3 propyle), et ainsi que parmi les groupes aryles (e.g. phényle, xylyle et tolyle),

Alc = alcényle, de préférence vinyle (noté Vi), ou allyle.

Le POS majoritaire de la composition adhésive, à savoir le polyorganosiloxane (A), présente avantageusement des motifs de formule :

$$W_a Z_b SiO_{(4-(a+b))/2} \qquad (A.1)$$

dans laquelle :

- W est un groupe alcényle, de préférence vinyle
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,

et éventuellement des autres motifs de formule moyenne :

$$Z_c SiO_{(4-c)/2} \qquad (A.2)$$

dans laquelle Z a la même signification que ci-dessus et c a une valeur comprise entre 0 et 3.

Les groupes Z peuvent être identiques ou différents.

Par "alcényle", on entend une chaîne hydrocarbonée insaturée, linéaire ou ramifiée, substituée ou non, présentant au moins une double liaison oléfinique, et plus préférablement une seule double liaison. De préférence, le groupe "alcényle" présente de 2 à 8 atomes de carbone, mieux encore de 2 à 6. Cette chaîne hydrocarbonée comprend éventuellement au moins un hétéroatome tel que O, N, S.

Des exemples préférés de groupes "alcényle" sont les groupes vinyle, allyle et homoallyle; le vinyle étant particulièrement préféré.

Par "alkyle", on désigne une chaîne hydrocarbonée saturée, cyclique, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 4 atomes de carbone.

Des exemples de groupes alkyles sont notamment méthyle, éthyle, isopropyle, n-propyle, tert-butyle, isobutyle, n-butyle, n-pentyle, isoamyle et 1,1-diméthylpropyle.

L'expression "aryle" désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun.

A titre d'exemple "d'aryle", on peut mentionner e.g. les radicaux phényle, xylyle et tolyle.

Avantageusement, le POS (A) a une viscosité au moins égale à 10 mPa.s, de préférence à 1000 mPa.s et plus préférentiellement encore comprise entre 5 000 et 200 000 mPa.s.

Dans le présent exposé, les viscosités indiquées correspondent à une grandeur de viscosité dynamique mesurée à 25°C, à l'aide d'un viscosimètre BROOKFIELD, selon la norme AFNOR NFT 76 102 de février 1972.

Bien entendu, le POS (A) peut être un mélange de plusieurs huiles répondant à la même définition que le POS (A).

Le POS (A) peut être uniquement formé de motifs de formule (A.1) ou peut contenir, en outre, des motifs de formule (A.2).

Le POS (A) est avantageusement un polymère linéaire, dont la chaîne diorganopolysiloxanique est constituée essentiellement de motifs siloxy D ou $D^{Vi}$, et est bloquée à chaque extrémité par un motif siloxy M ou $M^{Vi}$.

De préférence, au moins 60 % des groupes Z représentent des radicaux méthyle. La présence, le long de la chaîne diorganopolysiloxanique, de faibles quantités de motifs autres que $Z_2SiO$, par exemple de motifs de formule $ZSiO_{1,5}$ (motifs siloxy T) et/ou $SiO_2$ (motifs siloxy Q) n'est cependant pas exclue dans la proportion d'au plus 2 % (ces pourcentages exprimant le nombre des motifs T et/ou Q pour 100 atomes de silicium).

Des exemples de motifs siloxyles de formule (A.1) sont les motifs vinyldiméthylsiloxyle, vinylphénylméthylsiloxyle, et vinylsiloxyle.

Des exemples de motifs siloxyles de formule (A.2) sont le motif $SiO_{4/2}$, diméthylsiloxyle, méthylphénylsiloxyle, diphénylsiloxyle, méthylsiloxyle et phénylsiloxyle.

Des exemples de POS (A) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Ces huiles POS (A) sont commercialisées par les fabricants de silicone ou peuvent être fabriquées en opérant selon des techniques déjà connues.

Le réticulant polyorganosiloxane (B) est de préférence du type de ceux comportant le motif siloxyle de formule :

$$H_d \, Le \, SiO_{(4-(d+e))/2} \qquad (B.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryle,
- d est 1 ou 2, e est 0, 1 ou 2 et d + e a une valeur comprise entre 1 et 3 ;

et éventuellement des autres motifs siloxyles de formule moyenne :

$$Lg \, SiO_{(4-g)/2} \qquad (B.2)$$

dans laquelle L a la même signification que ci-dessus et g a une valeur comprise entre 0 et 3.

La viscosité dynamique de ce polyorganosiloxane (B) est au moins égale à 5 mPa.s et, de préférence elle est comprise entre 20 et 1000 mPa.s.

Le polyorganosiloxane (B) peut être uniquement formé de motifs de formule (B.1) ou comporter en plus des motifs de formule (B.2).

Le polyorganosiloxane (B) peut présenter une structure linéaire ramifiée cyclique ou en réseau.

Le groupe L a la même signification que le groupe Z ci-dessus.

Des exemples de motifs siloxyles de formule (B.1) sont :

$$H(CH_3)_2SiO_{1/2}, \, HCH_3SiO_{2/2}, \, H(C_6H_5)SiO_{2/2}$$

Les exemples de motifs siloxyles de formule (B.2) sont les mêmes que ceux indiqués ci-dessus pour les exemples de motifs siloxyles de formule (A.2).

Des exemples de polyorganosiloxanes (B) sont des composés linéaires et cycliques comme :

- les diméthylpolysiloxanes à extrémités hydrogénodiméthylsilyles,
- les copolymères à motifs (diméthyl)-(hydrogénométhyl)-polysiloxanes à extrémités triméthylsilyles,
- les copolymères à motifs (diméthyl)-(hydrogénométhyl)-polysiloxanes à extrémités hydrogénodiméthylsilyles,
- les hydrogénométhylpolysiloxanes à extrémités triméthylsilyles,
- les hydrogénométhylpolysiloxanes cycliques.

D'une manière particulièrement avantageuse, le réticulant polyorganosiloxane (B) est constitué d'un mélange d'un réticulant polyorganosiloxane (Bi) dont la chaîne organopolysiloxanique est constituée essentiellement de motifs $LgSiO_{(4-g)/2}$ , g étant compris entre 0 et 2, et est bloquée à chaque extrémité par un motif $H_dL_eSiO_{(4-(d+e))/2}$ où d+e est égal à 3, et d'un réticulant polyorganosiloxane (Bii) dont la chaîne organopolysiloxanique comprend des motifs $LgSiO_{(4-g)/2}$ , g étant compris entre 0 et 2 et des motifs $H_dL_eSiO_{(4-(d+e))/2}$ où d+e est égal à 1 ou 2, et est bloquée à chaque extrémité par un motif $H_dL_eSiO_{(4-(d+e))/2}$ où d+e est égal à 3.

De préférence, les quantités de POS (Bi) et de POS (Bii) sont telles que le rapport pondéral POS (Bi) : POS (Bii) est compris entre 1 et 3.

De préférence, le réticulant POS (Bi) est un diméthylpolysiloxane à extrémités hydrogénodiméthylsilyles et le réticulant POS (Bii) est un copolymère (diméthyl)(hydrogénométhyl)polysiloxane à extrémités hydrogénodiméthylsilyles.

Le rapport du nombre d'atomes d'hydrogène liés au silicium dans le réticulant polyorganosiloxane (B) sur le nombre total de groupes à insaturation alcényle du polyorganosiloxane (A) et de la gomme (A') est compris entre 0,4 et 10, de préférence entre 0,8 et 3, et plus préférentiellement encore supérieur ou égal à 0,8 et en outre inférieur à 1.

Selon l'invention, la composition comprend, outre le POS (A), une gomme POS (A'). La gomme polyorganosiloxane (A') utile dans la présente invention est de préférence une gomme polydiorganosiloxane ayant une consistance comprise entre 300 et 1200, de préférence entre 500 et 1000, et plus préférentiellement encore entre 600 et 900. La détermination de la consistance à 25°C peut être faite par mesure de la pénétrabilité à l'aide d'un pénétromètre par exemple selon une des normes AFNOR NFT 60 119, NFT 60 123, NFT 66 004, ASTM D 217, D 937, D 1321, D 5.

D'une manière générale, le POS (A') est défini de la même manière que le POS (A) et présente avantageusement des motifs de formule :

$$W_a\, Z_b\, SiO_{(4-(a+b))/2} \qquad (A.1)$$

et éventuellement des autres motifs de formule moyenne :

$$Z_c\, SiO_{(4-c)/2} \qquad (A.2)$$

dans laquelle W, Z, a, b et c ont la même définition que ci-dessus.

De préférence, la chaîne organopolysiloxanique de la gomme POS (A') comporte essentiellement des motifs de formule A1 dans laquelle a+b est égal à 2 et/ou des motifs de formule A2 dans laquelle c est égal à 2.

De préférence, la chaîne organopolysiloxanique de la gomme (A') contient essentiellement des motifs siloxy D et/ou $D^{Alc}$, R° tel que défini ci-dessus étant de préférence un groupe méthyle ou phényle, et Alc étant de préférence un groupe vinyle ou allyle. Ainsi, la gomme selon l'invention peut par exemple contenir essentiellement des motifs diméthylsiloxy, méthylphénylsiloxy, diphénylsiloxy, méthylvinylsiloxy, méthylallylsiloxy et phénylvinylsiloxy. La présence, le long de la chaîne diorganopolysiloxanique, de faibles quantités de motifs siloxy T et/ou $SiO_2$ (motifs siloxy Q) n'est cependant pas exclue dans la proportion d'au plus 2 % (ces pourcentages exprimant le nombre des motifs T et/ou Q pour 100 atomes de silicium).

De préférence, la chaîne organopolysiloxanique de la gomme est bloquée à chaque extrémité par des motifs siloxy M ou $M^{Vi}$.

Selon un mode de réalisation préféré, le(s) groupe(s) alcényle(s) de la gomme sont répartis, de manière aléatoire, sur la chaîne organopolysiloxanique de ladite gomme, à l'exception des extrémités. Par exemple, la gomme utilisée dans l'invention est de structure $MDD^{Vi}M$.

Selon une autre variante, le(s) groupe(s) alcényle(s) de la gomme sont disposés uniquement aux extrémités de la chaîne organopolysiloxanique de ladite gomme. Par exemple, la gomme utilisée dans l'invention est de structure $M^{Vi}DM^{Vi}$.

Il est bien évident que ces différents types de gomme peuvent être combinés.

La gomme utilisée dans l'invention peut être présente à raison de 5 à 20% en poids, de préférence de 5 à 10% en poids, par rapport à l'ensemble des constituants.

La réaction de polyaddition propre au mécanisme de réticulation de la composition adhésive selon l'invention est bien connue par l'homme du métier. On peut d'ailleurs utiliser un catalyseur (C) dans cette réaction. Ce catalyseur (C) peut notamment être choisi parmi les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (C), calculée en poids de platine-métal, est généralement comprise entre 2 et 400 ppm, de préférence entre 5 et 100 ppm basés sur le poids total des POS (A) et (B).

La charge minérale renforçante (D) est sélectionnée parmi les silices et/ou les alumines, de préférence parmi les silices.

A titre de silices utilisables, on vise des charges caractérisées par une fine taille de particules souvent inférieure ou égale à 0,1 μm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des compositions silicone adhésives. Ces silices peuvent être des silices colloïdales, des silices préparées par voie pyrogénique (silices dites de combustion ou de fumée) ou par des procédés humides (silices précipitées) ou des mélanges de ces silices.

La nature chimique et le procédé de préparation des silices susceptibles de former la charge (D) ne sont pas importants aux fins de la présente invention, pourvu que la silice soit capable d'exercer une action de renforcement dans l'adhésif fini. Bien entendu on peut utiliser aussi des coupages de différentes silices.

Ces poudres de silice présentent une taille moyenne de particule généralement voisine ou inférieure à 0,1 μm et une surface spécifique BET supérieure à 50 m$^2$/g, de préférence comprise 50 et 400 m$^2$/g, notamment entre 150 et 350 m$^2$/g.

Ces silices sont éventuellement :

➢ prétraitées à l'aide d'au moins un agent de compatibilisation choisi dans le groupe des molécules qui satisfont à au moins deux critères :

❖ présenter une interaction forte avec la silice au niveau de ses liaisons hydrogène avec elle-même, et avec l'huile silicone environnante ;
❖ être elle-même, ou ses produits de dégradation, aisément évacués du mélange final par chauffage sous vide ou sous courant gazeux, et les composés de bas poids moléculaire sont donc préférés ;

➢ et/ou traitées in situ :

• de manière spécifique à l'aide d'au moins une silice non traitée,
• et/ou de manière complémentaire en utilisant au moins un agent de compatibilisation de nature similaire à celui utilisable en prétraitement et tel que défini ci-dessus.

Par traitement in situ de la charge siliceuse, on entend la mise en présence de la charge et de l'agent de compatibilisation en présence d'au moins une portion du polymère silicone POS (A) prépondérant susvisé.

L'agent de compatibilisation est choisi selon le mode de traitement (prétraitement ou in situ), il peut être par exemple sélectionné dans le groupe comprenant:

- les chlorosilanes,
- les polyorganocyclosiloxanes, tels que l'octaméthylcyclosiloxane (D4),
- les silazanes, de préférence les disilazanes, ou leurs mélanges, l'hexaméthyldisilazane (HMDZ) étant le silazane préféré et pouvant être associé au divinyltétraméthyl-disilazane,
- les polyorganosiloxanes présentant, par molécule, un ou plusieurs groupements hydroxyles liés au silicium,
- les amines telles que l'ammoniaque ou les alkylamines de bas poids moléculaire comme la diéthylamine,
- les acides organiques de bas poids moléculaire comme les acides formique ou acétique,
- et leurs mélanges.

Dans le cas du traitement in situ, l'agent de compatibilisation est de préférence mis en oeuvre en présence d'eau.

Pour plus de détails à cet égard, on peut se référer par exemple au brevet FR-B-2 764 894.

En variante, on peut utiliser les méthodes de compatibilisation de l'art antérieur prévoyant un traitement précoce par le silazane (e.g. FR-A-2 320 324) ou un traitement tardif (e.g. EP-A-462 032) tout en sachant cependant que selon les silices utilisées leur emploi ne permettra en général pas d'obtenir les meilleurs résultats en termes de propriétés mécaniques, en particulier extensibilité, obtenus par un traitement en deux temps conforme à l'invention.

A titre d'alumine de renforcement utilisable comme charge (D), on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKOWSKI. De préférence, la charge de renforcement utilisée est une silice de combustion, prise seule ou en mélange avec de l'alumine.

Sur le plan pondéral, on préfère mettre en oeuvre une quantité de charge renforçante (D) comprise entre 5 et 30, de préférence entre 7 et 20 % en poids par rapport à l'ensemble des constituants de la composition.

L'utilisation d'une charge complémentaire (E), de préférence non renforçante, est envisageable conformément à l'invention.

Parmi les charges complémentaires (E) non renforçantes, on peut citer notamment celles sélectionnées dans le groupe comprenant les silices colloïdales, les poudres de silice de combustion et de précipitation, les terres de diatomées, le quartz broyé le noir de carbone, le dioxyde de titane, l'oxyde d'aluminium, l'alumine hydratée, la vermiculite expansée, le zircone, un zirconate, la vermiculite non expansée, le carbonate de calcium, l'oxyde de zinc, le mica, le talc, l'oxyde de fer, le sulfate de baryum et la chaux éteinte ou leurs mélanges.

Ces charges complémentaires (E) ont une granulométrie généralement comprise entre 0,1 et 300 $\mu$m et une surface BET inférieure à 100 m$^2$/g.

Les inhibiteurs de réticulation (F) sont également bien connus. Ils sont classiquement choisis parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

$$R - (R') C (OH) - C \equiv CH$$

formule dans laquelle :

- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en alpha de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250 °C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2ol-1 ;
- l'éthyl-3 éthyl-6 nonyne-1 ol-3 ;
- le méthyl-3 pentadécyne-1 ol-3.

Ces alcools alpha-acétyléniques sont des produits du commerce.

Un tel régulateur est présent à raison de 2 000 ppm au maximum, de préférence à raison de 20 à 50 ppm par rapport au poids total des organopolysiloxanes (A) et (B).

Selon une variante la phase silicone de la composition peut comprendre au moins une résine polyorganosiloxane (H), comportant éventuellement au moins un reste alcényle dans sa structure, et cette résine présente une teneur pondérale en groupe(s) alcényle(s) comprise entre 0,1 et 20 % en poids et, de préférence, entre 0,2 et 10 % en poids.

Ces résines sont des oligomères ou polymères organopolysiloxanes ramifiés bien connus et disponibles dans le commerce. Elles se présentent de préférence sous la forme de solutions siloxaniques. Elles comportent, dans leur structure, au moins deux motifs différents choisis parmi les motifs M, D, T et Q, l'un au moins de ces motifs étant un motif TouQ.

De préférence, ces résines sont alcénylées (vinylées). Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T. Comme exemple de résines qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.

D'une manière connue en soi, la composition adhésive selon l'invention peut être additionnée de divers additifs fonctionnels (I) habituellement utilisés dans le domaine de l'invention.

Pour des raisons de conservation, la composition de vernis est avantageusement présentée sous la forme d'un système au moins bicomposant dont le mélange est apte à réticuler rapidement à chaud par polyaddition. Les ingrédients sont alors répartis dans les différentes parties selon les règles de l'homme de l'art ; en particulier le catalyseur est séparé du composant qui comporte les hydrogénosiloxanes.

La présente invention concerne également un procédé de collage d'au moins deux substrats S1 et S2 caractérisé en ce qu'il consiste essentiellement :

- à préparer une composition adhésive telle que décrite ci-dessus
- à appliquer cette composition sur l'une au moins des surfaces de S1 et/ou S2 à coller,
- à assembler l'une à l'autre les surfaces encollées,
- éventuellement à exercer une pression sur les surfaces encollées,
- et de préférence à chauffer l'ensemble.

La température de chauffage est de préférence inférieure à 190°C pour un temps de chauffage inférieur à 5 minutes, de préférence 3 minutes, et de préférence de 180°C pour un temps de chauffage de 60 secondes, et plus préférentiellement encore de 80°C pour un temps de chauffage de 90 secondes.

Les substrats S1 et S2 à assembler sont de préférence souples, et peuvent être choisis dans le groupe comprenant les textiles, les supports fibreux non tissés, les films polymères, en particulier polyester, polyamide, polyoléfine, polyuréthanne, polychlorure de vinyle de silicone. Les substrats S1 et S2 peuvent être également du verre.

Selon une variante, au moins une des surfaces de S1 et/ou S2 comprend du silicone, de préférence du silicone élastomère, ce silicone formant avantageusement au moins un revêtement dudit substrat. La composition adhésive est alors appliquée sur le silicone. De telles compositions de silicone élastomère sont bien connues de l'Homme du métier et ne nécessitent de description détaillée.

La composition adhésive selon l'invention est appliquée de manière à obtenir un adhésif présentant une épaisseur d'au moins 0.5 mm.

Le domaine d'application de l'utilisation préconisée de l'invention est avantageusement celui de l'assemblage des sacs gonflables pour la protection d'un occupant de véhicule à assembler par collage et couture, les substrats S1 et S2 étant alors les deux pièces constituant le sac, la composition selon l'invention étant appliquée sur au moins une des surfaces de S1 et/ou S2 au niveau de la couture.

Lorsque la composition adhésive selon l'invention est réticulée par chauffage, l'étape de chauffage de ladite composition est mise en oeuvre de préférence avant de coudre les substrats S1 et S2.

La présente invention concerne également l'utilisation d'une composition telle que décrite ci-dessus comme adhésif et/ou comme joint d'étanchéité des coutures de deux substrats S1 et S2 assemblés par couture.

La présente invention concerne également un sac gonflable pour la protection d'un occupant de véhicule constitué de deux pièces cousues ensemble, collées et/ou étanchéifiées au niveau de la couture par une composition telle que décrite ci-dessus.

Les exemples qui suivent décrivent la préparation de la composition silicone adhésive réticulable selon l'invention. Ces exemples permettront de mieux comprendre l'invention et de faire ressortir ses avantages par rapport aux compositions de l'art antérieur.

## EXEMPLES

### Exemple 1 (invention) :

On mélange tout d'abord 30 parties en poids d'un polydiméthylsiloxane bloqué à chaque extrémité par des motifs diméthylvinylsiloxy, ayant une viscosité de 20 000 mPa.s, 13 parties en poids de silice pyrogénée ayant une surface spécifique BET de 300m$^2$/g, traitée par 3,8 parties en poids d'un mélange d'hexaméthyldisilazane associé au divinyltétraméthyldisilane, et une partie en poids d'eau.

On ajoute ensuite au mélange obtenu 10 parties en poids d'une gomme de copolymère de silicone MDD $^{Vi}$M qui titre 720 ppm en poids de groupes vinyliques répartis aléatoirement le long de la chaîne silicone, de consistance comprise entre 600 et 900, 28 parties en poids d'un polydiméthylsiloxane bloqué à chaque extrémité par des motifs diméthylvinylsiloxy, ayant une viscosité de 100 000 mPa.s, 13 parties en poids de carbonate de calcium précipité, de taille moyenne de particule de l'ordre de 1,9 $\mu$m, 1,1 parties en poids d'un réticulant (bi) diméthylpolysiloxane à extrémités hydrogénodiméthylsilyles de viscosité 9mPa.s, 0,6 parties en poids d'un réticulant (bii) copolymère (diméthyl)(hydrogénométhyl)polysiloxane à extrémités hydrogénodiméthylsilyles de viscosité 275 mPa.s et contenant 4,7% en poids de SiH, 0,025 parties en poids d'éthynyl-1-cyclohexanol 1 et 0,025 parties en poids d'un catalyseur appelé complexe de Karstedt titrant 10% en poids de platine métal. Le rapport du nombre d'atomes d'hydrogène liés au silicium dans le réticulant polyorganosiloxane (B) sur le nombre total de groupes à insaturation alcényle du polyorganosiloxane (A) et de la gomme (A') est égal à 0.87, le rapport du nombre d'atomes d'hydrogène liés au silicium dans le réticulant polyorganosiloxane (Bi) sur le nombre total de groupes à insaturation alcényle du polyorganosiloxane (A) et de la gomme (A') est égal à 0,61 et le rapport du nombre d'atomes d'hydrogène liés au silicium dans le réticulant polyorganosiloxane (Bii) sur le nombre total de groupes à insaturation alcényle du polyorganosiloxane (A) et de la gomme (A') est égal à 0,26.

La viscosité du mélange est de 575 000 mPa.s.

**Exemple 2** (Comparatif) :

A titre comparatif, on réalise une composition adhésive similaire à l'exemple 1 mais sans utiliser de gomme et en remplaçant la gomme par le polydiméthylsiloxane bloqué à chaque extrémité par des motifs diméthylvinylsiloxy, ayant une viscosité de 100 000 mPa.s.

**Caractérisation de l'adhésif**

a) Propriétés dynamométriques:

Les compositions adhésives, après débullage, sont utilisées pour préparer les éprouvettes nécessaires à la mesure des propriétés dynamométriques. Pour cela, on réalise des plaques échantillon de 2 mm d'épaisseur d'adhésif moulé sous presse à 3 bars à 150°C et réticulé dans ces conditions en 15 minutes. Après réticulation, les éprouvettes sont laissées en attente dans les conditions du laboratoire (25°C, 50%RH) pendant 16 heures, avant d'être testées. On mesure la résistance à la traction, les modules à 100%, 200%, et 300%, l'allongement à la rupture selon la méthode décrite dans la norme ASTM D412.

On mesure également la dureté (Shore A) selon la norme ASTM D2240

b) Force de collage

La force de collage est évaluée au moyen d'un test de pelage. Pour cela, les compositions adhésives sont appliquées entre deux supports textile du type polyamide sur lesquels une enduction de RTV II a été appliquée à 30g/m². La composition du RTV-II utilisée est le RHODORSIL ® TCS 7534 commercialisée par la société Rhodia Silicones. Les compositions adhésives sont appliquées au moyen d'un enducteur Mathis réglé de manière à obtenir une épaisseur de l'adhésif de 0.5 mm. La réticulation est effectuée par séjour dans une étuve ventilée, à une température de 190°C pendant 5 minutes. Après réticulation, les supports sont laissés en attente dans les conditions du laboratoire (25°C, 50%RH) pendant 16 heures, avant d'être testés. On mesure la force de collage selon la méthode du test de pelage décrite dans la norme JISK 6854. On note également en pourcentage le type de rupture obtenue, adhésive ou cohésive noté A/C.

L'énergie est calculée en calculant l'aire sous la courbe de traction représentant la contrainte en fonction de la déformation.

Les différentes compositions sont soumises aux tests décrits ci-dessus pour caractériser l'adhésif obtenu. Les résultats sont indiqués dans le tableau I ci-dessous :

Tableau I

| Propriétés. Mécaniques | Ex. 1 (inv.) | Ex. 2 (comp.) |
|---|---|---|
| Résistance à la traction (MPa) | 5 | 3 |
| Allongement à la rupture (%) | 1180 | 1005 |
| Module 100% (MPa) | 0.25 | 0.1 |
| Module 200% (MPa) | 0.4 | 0.3 |

(suite)

| Propriétés. Mécaniques | Ex. 1 (inv.) | Ex. 2 (comp.) |
|---|---|---|
| Module 300% (MPa) | 0.6 | 0.5 |
| Dureté Shore A | 15 | 12 |
| Force de pelage (N/cm) | 34 | |
| Rupture A/C | 0/100 | |
| **Energie (MPa)** | **2430** | **1346** |

Les résultats du tableau I montrent que la composition adhésive selon l'invention, comprenant une gomme vinylée, permet d'obtenir un adhésif qui présente des propriétés mécaniques, et en particulier une énergie absorbée, meilleures que l'adhésif ne comprenant pas de gomme.

**Paramètres de réticulation**

On reproduit avec la composition adhésive selon l'exemple 1 le test de pelage tel que décrit ci-dessus mais en faisant varier le temps et la température de réticulation.

Les résultats sont indiqués dans le tableau II ci-dessous :

Tableau II

| Température | 190°C | 190°C | 180°C | 160°C | 120°C | 80°C | 25°C |
|---|---|---|---|---|---|---|---|
| Temps | 5 min | 1 min | 90 s | 90 s | 90 s | 90 s | 3 h |
| Force de pelage (N/cm) | 34 | 30 | 35 | 32 | 31 | 36 | 15 |
| Rupture A/C | 0/100 | 0/100 | 0/100 | 10/90 | 10/90 | 30/70 | 100/0 |

Les résultats du tableau II montrent que le temps de réticulation des compositions adhésives selon l'invention est très court, même à basse température. La composition selon l'invention durcit à température ambiante (25°C) en trois heures. On rappelle que comparativement, la composition décrite dans le brevet EP-B-1 225 211 est laissée durcir pendant 7 jours à 25°C. De plus, si l'on souhaite accélérer la réticulation par chauffage, une très faible quantité d'énergie est suffisante pour réticuler la composition dans un temps très court : 90 secondes à 80°C suffisent pour obtenir un adhésif présentant toutes les propriétés mécaniques requises et avec une rupture essentiellement cohésive.

**Revendications**

1.  Composition silicone adhésive réticulable comprenant :

    (A) au moins un polyorganosiloxane (POS A) présentant, par molécule, au moins deux groupes alcényles, de préférence en $C_2$-$C_6$ liés au silicium;
    (B) au moins un réticulant polyorganosiloxane présentant, par molécule, au moins deux atomes d'hydrogène liés au silicium;
    (C) une quantité catalytiquement efficace d'au moins un catalyseur à base d'au moins un composé métallique, de préférence platinique ;
    (D) une charge minérale renforçante;
    (E) éventuellement une charge complémentaire;
    (F) éventuellement un inhibiteur de réticulation
    (H) éventuellement au moins une résine polyorganosiloxane;
    (I) et éventuellement des additifs fonctionnels pour conférer des propriétés spécifiques,

    **caractérisée en ce que** la composition comprend également au moins une gomme polyorganosiloxane POS (A') ayant une teneur pondérale en groupe(s) alcényle(s), de préférence en $C_2$-$C_6$ liés au silicium et plus préférentiellement encore vinylique(s), comprise entre 0,001% et 0,2%, et de préférence entre 0,01% et 0,1%, et présentant à 25°C une consistance comprise entre 300 et 1200, de préférence entre 500 et 1000, et plus préférentiellement encore entre 600 et 900.

2. Composition selon la revendication 1, **caractérisée en ce que** les POS (A) et (A') présentent des motifs de formule :

$$W_a \, Z_b \, SiO_{(4-(a+b))/2} \qquad (A.1)$$

dans laquelle :

- W est un groupe alcényle, de préférence vinyle
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 ou 2 et a + b est compris entre 1 et 3,

et éventuellement des autres motifs de formule moyenne :

$$Z_c \, SiO_{(4-c)/2} \qquad (A.2)$$

dans laquelle Z a la même signification que ci-dessus et c a une valeur comprise entre 0 et 3.

3. Composition selon l'une quelconque des revendications précédentes, **caractérisée en ce que** le réticulant polyorganosiloxane (B) comporte des motifs siloxyles de formule :

$$H_d \, L_e \, SiO_{(4-(d+e))/2} \qquad (B.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- d est 1 ou 2, e est 0, 1 ou 2 et d + e a une valeur comprise entre 1 et 3 ;

et éventuellement des autres motifs siloxyles de formule moyenne :

$$L_g \, SiO_{(4-g)/2} \qquad (B.2)$$

dans laquelle L a la même signification que ci-dessus et g a une valeur comprise entre 0 et 3.

4. Composition selon la revendication 3, **caractérisée en ce que** le réticulant polyorganosiloxane (B) est constitué d'un mélange d'un réticulant polyorganosiloxane (Bi) dont la chaîne organopolysiloxanique est constituée essentiellement de motifs $L_g \, SiO_{(4-g)/2}$ , g étant compris entre 0 et 2, et est bloquée à chaque extrémité par un motif $H_d L_e SiO_{(4-(d+e))/2}$ où d+e est égal à 3, et d'un réticulant polyorganosiloxane (Bii) dont la chaîne organopolysiloxanique comprend des motifs $L_g \, SiO_{(4-g)/2}$ , g étant compris entre 0 et 2 et des motifs $H_d \, L_e \, SiO_{(4-(d+e))/2}$ où d+e est égal à 1 ou 2, et est bloquée à chaque extrémité par un motif $H_d \, Le \, SiO_{(4-(d+e))/2}$ où d+e est égal à 3.

5. Composition selon l'une quelconque des revendications précédentes, **caractérisée en ce que** le rapport du nombre d'atomes d'hydrogène liés au silicium dans le réticulant polyorganosiloxane (B) sur le nombre total de groupes à insaturation alcényle du polyorganosiloxane (A) et de la gomme (A') est inférieur à 1.

6. Composition selon la revendication 2, **caractérisée en ce que** la chaîne organopolysiloxanique de la gomme POS (A') comporte essentiellement des motifs de formule A1 dans laquelle a+b est égal à 2 et/ou des motifs de formule A2 dans laquelle c est égal à 2.

7. Composition selon l'une quelconque des revendications précédentes, **caractérisée en ce que** le(s) groupe(s) alcényle(s) de la gomme (A') sont répartis sur la chaîne organopolysiloxanique de ladite gomme, à l'exception des extrémités.

8. Composition selon l'une quelconque des revendications 1 à 6, **caractérisée en ce que** le(s) groupe(s) alcényle(s) de la gomme (A') sont disposés uniquement aux extrémités de la chaîne organopolysiloxanique de ladite gomme.

9. Composition selon l'une quelconque des revendications précédentes, caractérisée en ce la gomme (A') est présente à raison de 5 à 20% en poids par rapport à l'ensemble des constituants.

10. Composition selon l'une quelconque des revendications précédentes, caractérisée en ce la charge minérale renforçante (D) est sélectionnée parmi le groupe comprenant les silices et les alumines.

11. Procédé de collage d'au moins deux substrats S1 et S2 **caractérisé en ce qu'**il consiste essentiellement :

   - à préparer une composition selon l'une quelconque des revendications 1 à 10,
   - à appliquer cette composition sur l'une au moins des surfaces de S1 et/ou S2 à coller,
   - à assembler l'une à l'autre les surfaces encollées,
   - éventuellement à exercer une pression sur les surfaces encollées,
   - et de préférence à chauffer l'ensemble.

12. Procédé selon la revendication 11, **caractérisée en ce que** les substrats S1 et S2 sont deux pièces constituant un sac gonflable pour la protection d'un occupant de véhicule à assembler par couture, la composition étant appliquée sur au moins une des surfaces de S1 et/ou S2 au niveau de la couture.

13. Procédé selon la revendication 12, **caractérisé en ce que** l'étape de chauffage de ladite composition est mise en oeuvre avant de coudre les substrats S1 et S2.

14. Utilisation d'une composition selon l'une quelconque des revendications 1 à 10 comme adhésif.

15. Utilisation d'une composition selon l'une quelconque des revendication 1 à 10 comme joint d'étanchéité des coutures de deux substrats S1 et S2 assemblés par couture.

16. Sac gonflable pour la protection d'un occupant de véhicule constitué de deux pièces cousues ensemble, collées et/ou étanchéifiées au niveau de la couture par une composition selon l'une quelconque des revendications 1 à 10.


**Patentansprüche**

1. Vernetzbare Silikonhaftzusammensetzung, umfassend:

   (A) mindestens ein Polyorganosiloxan (POS A), das je Molekül mindestens zwei Alkenylgruppen, bevorzugt mit 2 bis 6 Kohlenstoffatomen, gebunden an das Silicium, aufweist;
   (B) mindestens ein Polyorganosiloxanvernetzungsmittel, das je Molekül mindestens zwei Wasserstoffatome, gebunden an das Silicium, aufweist;
   (C) eine katalytisch wirksame Menge mindestens eines Katalysators auf Basis mindestens einer Metallverbindung, bevorzugt einer Platinverbindung;
   (D) einen verstärkenden mineralischen Füllstoff;
   (E) gegebenenfalls einen zusätzlichen Füllstoff;
   (F) gegebenenfalls einen Vernetzungsinhibitor;
   (H) gegebenenfalls mindestens ein Polyorganosiloxanharz;
   (I) und gegebenenfalls funktionelle Zusatzstoffe, um spezifische Eigenschaften zu verleihen,

   **dadurch gekennzeichnet, dass** die Zusammensetzung auch mindestens einen Polyorganosiloxankautschuk POS (A') umfasst, der einen Gewichtsanteil an Alkenylgruppe(n) mit bevorzugt 2 bis 6 Kohlenstoffatomen, gebunden an das Silicium, und noch stärker bevorzugt Vinylgruppe(n) im Bereich zwischen 0, 001 % und 0,2 % und bevorzugt zwischen 0,01 % und 0,1 % hat und bei 25 °C eine Viskosität im Bereich zwischen 300 und 1.200, bevorzugt zwischen 500 und 1.000 und noch stärker bevorzugt zwischen 600 und 900 aufweist.

2. Zusammensetzung nach Anspruch 1, **dadurch gekennzeichnet, dass** die POS (A) und (A') Einheiten der Formel:

$$W_a Z_b SiO_{(4-(a+b))/2} \qquad (A.1)$$

aufweisen, worin:

- W für eine Alkenylgruppe, bevorzugt Vinyl, steht,
- Z für eine einwertige Kohlenwasserstoffgruppe steht, die frei von ungünstiger Wirkung auf die Aktivität des Katalysators ist, und aus den Alkylgruppen mit 1 bis einschließlich 8 Kohlenstoffatomen, gegebenenfalls substituiert mit mindestens einem Halogenatom, sowie aus den Arylgruppen ausgewählt ist,
- a für 1 oder 2 steht, b für 0, 1 oder 2 steht und a + b im Bereich zwischen 1 und 3 liegt, und gegebenenfalls andere Einheiten mit der durchschnittlichen Formel:

$$Z_c \, SiO_{(4-c)/2} \qquad (A.2)$$

worin Z die gleiche Bedeutung hat wie oben und c einen Wert im Bereich zwischen 0 und 3 hat.

3. Zusammensetzung nach einem der vorhergehenden Ansprüche, **dadurch gekennzeichnet, dass** das Polyorganosiloxanvernetzungsmittel (B) Siloxyleinheiten der Formel:

$$H_d \, L_e \, SiO_{(4-(d+e))/2} \qquad (B-1)$$

umfasst, worin:

- L für eine einwertige Kohlenwasserstoffgruppe steht, die frei von ungünstiger Wirkung auf die Aktivität des Katalysators ist, und aus den Alkylgruppen mit 1 bis einschließlich 8 Kohlenstoffatomen, gegebenenfalls substituiert mit mindestens einem Halogenatom, sowie aus den Arylgruppen ausgewählt ist,
- d für 1 oder 2 steht, e für 0, 1 oder 2 steht und d + e einen Wert im Bereich zwischen 1 und 3 haben;

und gegebenenfalls andere Siloxyleinheiten mit der durchschnittlichen Formel:

$$L_g \, SiO_{(4-g)/2} \qquad (B-2)$$

worin L die gleiche Bedeutung hat wie oben und g einen Wert im Bereich zwischen 0 und 3 hat.

4. Zusammensetzung nach Anspruch 3, **dadurch gekennzeichnet, dass** das Polyorganosiloxanvernetzungsmittel (B) aus einem Gemisch aus einem Polyorganosiloxanvernetzungsmittel (Bi), dessen Polyorganosiloxankette im Wesentlichen aus Einheiten $L_g \, SiO_{(4-g)/2}$ besteht, wobei g im Bereich zwischen 0 und 2 liegt, und an jedem Ende durch eine Einheit $H_d L_e SiO_{(4-(d+e))/2}$ blockiert ist, wobei d+e gleich 3 ist, und aus einem Polyorganosiloxanvernetzungsmittel (Bii) besteht, dessen Polyorganosiloxankette Einheiten $L_g \, SiO_{(4-g)/2}$, wobei g im Bereich zwischen 0 und 2 liegt, und Einheiten $H_d \, L_e \, SiO_{(4-(d+e))/2}$ umfasst, wobei d + e gleich 1 oder 2 ist und an jedem Ende mit einer Einheit $H_d \, L_e \, SiO_{(4-(d+e))/2}$ blockiert ist, wobei d + e gleich 3 ist.

5. Zusammensetzung nach einem der vorhergehenden Ansprüche, **dadurch gekennzeichnet, dass** das Verhältnis der Anzahl an Wasserstoffatomen, die in dem Polyorganosiloxanvernetzungsmittel (B) an Silicium gebunden sind, zur Gesamtzahl an Gruppen mit Alkenyl-Ungesättigtheit des Polyorganosiloxans (A) und des Kautschuks (A') kleiner 1 ist.

6. Zusammensetzung nach Anspruch 2, **dadurch gekennzeichnet, dass** die Polyorganosiloxankette des Kautschuks POS (A') im Wesentlichen Einheiten der Formel A1 umfasst, worin a+b gleich 2 ist, und/oder Einheiten der Formel A2, worin c gleich 2 ist.

7. Zusammensetzung nach einem der vorhergehenden Ansprüche, **dadurch gekennzeichnet, dass** die Alkenylgruppe(n) des Kautschuks (A') auf der Polyorganosiloxankette des Kautschuks, mit Ausnahme der Enden, verteilt ist/sind.

8. Zusammensetzung nach einem der Ansprüche 1 bis 6, **dadurch gekennzeichnet, dass** die Alkenylgruppe(n) des Kautschuks (A') ausschließlich an den Enden der Polyorganosiloxankette des Kautschuks angeordnet ist/sind.

9. Zusammensetzung nach einem der vorhergehenden Ansprüche, **dadurch gekennzeichnet, dass** der Kautschuk (A') in einem Anteil von 5 bis 20 Gew.-%, bezogen auf die Gesamtheit der Bestandteile, vorhanden ist.

10. Zusammensetzung nach einem der vorhergehenden Ansprüche, **dadurch gekennzeichnet, dass** der verstärkende mineralische Füllstoff (D) ausgewählt ist aus der Gruppe umfassend Siliciumdioxide und Aluminiumoxide.

**11.** Verfahren zum Kleben von mindestens zwei Substraten S1 und S2, **dadurch gekennzeichnet, dass** es im Wesentlichen aus Folgendem besteht:

- Herstellen einer Zusammensetzung nach einem der Ansprüche 1 bis 10,
- Auftragen dieser Zusammensetzung auf mindestens eine der zu verklebenden Oberflächen von S1 und/oder S2,
- Zusammenfügen der mit Kleber bestrichenen Oberflächen,
- gegebenenfalls Ausüben eines Drucks auf die mit Kleber bestrichenen Oberflächen,
- und bevorzugt Erwärmen des Ganzen.

**12.** Verfahren nach Anspruch 11, **dadurch gekennzeichnet, dass** die Substrate S1 und S2 zwei Teile sind, die einen Airbag zum Schutz eines Fahrzeuginsassen bilden, die durch Nähen zusammengefügt werden, wobei die Zusammensetzung auf mindestens einer der Oberflächen von S1 und/oder S2 im Bereich der Naht aufgetragen wird.

**13.** Verfahren nach Anspruch 12, **dadurch gekennzeichnet, dass** der Schritt des Erwärmens der Zusammensetzung vor dem Nähen der Substrate S1 und S2 durchgeführt wird.

**14.** Verwendung einer Zusammensetzung nach einem der Ansprüche 1 bis 10 als Klebstoff.

**15.** Verwendung einer Zusammensetzung nach einem der Ansprüche 1 bis 10 als Abdichtung der Nähte der beiden durch Nähen zusammengefügten Substrate S1 und S2.

**16.** Airbag zum Schutz eines Fahrzeuginsassen, der aus zwei zusammengenähten Teilen besteht, die im Bereich der Naht mit einer Zusammensetzung nach einem der Ansprüche 1 bis 10 geklebt und/oder abgedichtet wurden.

**Claims**

**1.** Crosslinkable adhesive silicone composition comprising:

(A) at least one polyorganosiloxane (POS A) having,
per molecule, at least two alkenyl groups, preferably with $C_2$-$C_6$ linked to silicon;
(B) at least one polyorganosiloxane crosslinking agent having, per molecule, at least two hydrogen atoms linked to silicon;
(C) a catalytically effective quantity of a least one catalyst based on at least one metallic compound, preferably of platinum:
(D) a reinforcing filler;
(E) optionally a complementary filler;
(F) optionally a crosslinking inhibitor;
(H) optionally at least one polyorganosiloxane resin;
(I) and optionally functional additives for conferring specific properties,

**characterized in that** it also includes at least one polyorganosiloxane gum POS (A') having a content by weight of an alkenyl group or groups, preferably with $C_2$-$C_6$ linked to silicon, and even more preferably a vinyl group or groups of between 0.001 and 0.2%, preferably between 0.01% and 0.1%, and having, at 25°C, a consistency of between 300 and 1200, preferably between 500 and 1000, and even more preferably between 600 and 900.

**2.** Composition according to Claim 1, **characterized in that** the POSs (A) and (A') have units of formula:

$$W_a Z_b SiO_{(4-(a+b))/2} \qquad (A.1)$$

in which:

- W is an alkenyl group, preferably vinyl,
- Z is a monovalent hydrocarbon group, free from an unfavorable action on the activity of the catalyst and chosen from alkyl groups having 1 to 8 carbon atoms inclusively, possibly substituted with at least one halogen atom, as well as from aryl groups,
- a is 1 or 2, b is 0, 1 or 2 and a+b is between 1 and 3;

and optionally other units with the average formula:

$$Z_cSiO_{(4-c)/2} \qquad (A.2)$$

in which Z has the same meaning as above and c has a value of between 0 and 3.

3. Composition according to either of the preceding claims, **characterized in that** the polyorganosiloxane crosslinking agent (B) bears siloxyl units of formula:

$$H_dL_eSiO_{(4-(d+e)/2} \qquad (B.1)$$

in which:

- L is a monovalent hydrocarbon group, free from an unfavorable action on the activity of the catalyst and chosen from alkyl groups having 1 to 8 carbon atoms inclusively, possibly substituted with at least one halogen atom, as well as from aryl groups,
- d is 1 or 2, e is 0, 1 or 2 and d+e has a value between 1 and 3;

and optionally other, units with the average formula:

$$L_gSiO_{(4-g)/2} \qquad (B.2)$$

in which L has the same meaning as above and g has a value of between 0 and 3.

4. Composition according to Claim 3, **characterized in that** the polyorganosiloxane (B) consists of a mixture of a polyorganosiloxane crosslinking agent (Bi) of which the organopolysiloxane chain consists essentially of $L_gSiO_{(4-g)/2}$ units, g lying between 0 and 2, and is blocked at each end by a $H_dL_eSiO_{(4-(d+e))/2}$ unit where d+e is equal to 3 and of a polyorganosiloxane crosslinking agent (Bii) of which the polyorganosiloxane chain includes $L_gSiO_{(4-g)/2}$ units, g lying between 0 and 2 and $H_dL_eSiO_{(4-(d+e))/2}$ units where d+e is equal to 1 or 2, and is blocked at each end by a $H_dL_eSiO_{(4-(d+e))/2}$ unit where d+e is equal to 3.

5. Composition according to any one of the preceding claims, **characterized in that** the ratio of the number of hydrogen atoms linked to silicon in the polyorganosiloxane crosslinking agent (B) to the total number of groups with an alkenyl unsaturation of the polyorganosiloxane (A) and of the gum (A') is less than 1.

6. Composition according to Claim 2, **characterized in that** the organopolysiloxane chain of the gum POS(A') essentially bears units of formula A1 in which a+b is equal to 2 and/or units of formula A2 in which c is equal to 2.

7. Composition according to any one of the preceding claims, **characterized in that** the alkenyl group or groups of the gum are distributed on the organopolysiloxane chain of said gum with the exception of the ends.

8. Composition according to any one of Claims 1 to 6, **characterized in that** the alkenyl group or groups of the gum (A') are disposed solely at the ends of the organopolysiloxane chain of said gum.

9. Composition according to any one of the preceding claims, **characterized in that** the gum (A') is present in an amount of 5 to 20% by weight based on all the constituents.

10. Composition according to any one of the preceding claims, **characterized in that** the reinforcing filler (D) is selected from the group comprising silicas and aluminas.

11. Method for adhesively bonding at least two substrates S1 and S2, **characterized in that** it consists essentially:

- of preparing an adhesive composition as described above;
- of applying this composition to at least one of the surfaces of S1 and/or S2 to be adhesively bonded;
- of assembling the adhesive-coated surfaces together;

- optionally of exerting pressure on the adhesive-coated surfaces;
- and preferably of heating the assembly.

12. Method according to Claim 11, **characterized in that** the substrates S1 and S2 are the two parts constituting an inflatable bag for the protection of an occupant of a vehicle, to be assembled by sewing, the composition being applied on at least one of the surfaces of S1 and/or S2 in the region of the stitching.

13. Method according to Claim 12, **characterized in that** the heating step for said composition is preferably carried out before stitching the substrates S1 and S2.

14. Use of a composition according to any one of Claims 1 to 10 as an adhesive.

15. Use of a composition according to any one of Claims 1 to 10 as a leakproof joint for the stitching of two substrates S1 and S2 assembled by sewing.

16. Inflatable bag for protecting an occupant of a vehicle, consisting of two parts sewn together, adhesively bonded and/or made leakproof in the region of the stitching by a composition according to any one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0131854 B
- EP 1225211 B
- EP 1179454 A2
- WO 2004101696 A
- US 3159601 A
- US 3159602 A
- US 3220972 A
- EP 0057459 A
- EP 0188978 A
- EP 0190530 A

- US 3419593 A
- US 3715334 A
- US 3377432 A
- US 3814730 A
- FR 2764894 B
- FR 2320324 A
- EP 462032 A
- FR 1528464 B
- FR 2372874 A

**Littérature non-brevet citée dans la description**

- Chemistry and technology of silicones. Walter NOLL. Academic Press, 1968, 3